# EUROPÄISCHE PATENTANMELDUNG

(11) **EP 2 267 102 A1**
(43) Veröffentlichungstag der Anmeldung: **29.12.2010**
(21) Anmeldenummer: 09163560.7
(22) Anmeldetag: 24.06.2009
(51) Int. Cl.: C10J 3/00, C10K 1/16, C10K 1/18, C10K 1/32

(54) **System und Verfahren zur Aufbereitung von Gas aus einer Biomasse-Vergasung**

(71) Anmelder: CTU - Conzepte Technik Umwelt AG, 8400 Winterthur (CH)
(72) Erfinder: Schaub, Martin, 8483 Kollbrunn (CH); Ulrich, Beat Daniel, 8405 Winterthur (CH); Meyer, Benedikt Andreas, 8404 Winterthur (CH)
(74) Vertreter: Fischer, Michael

(57) **Zusammenfassung**

Der vorliegenden Erfindung liegt die Aufgabe zugrunde, ein Verfahren und ein System zur Aufbereitung von Gas aus einer Biomasse-Vergasung anzugeben, welche das Gas mit einer für die erforderlichen Standzeiten beispielsweise eines Methanierungsreaktor ausreichenden Reinheit bereitstellt.

Diese Aufgabe wird erfindungsgemäss durch ein Verfahren und ein System zur Aufbereitung eines aus einer Biomassevergasung stammenden Synthesegases gelöst, welche die folgenden Schritte umfassten:
a) erstes Quenchen des Synthesegases bei einer ersten Temperatur und einem ersten Druck;
b) optional nachfolgendes zweites Quenchen des gequenchten Synthesegases bei einer zweiten Temperatur und einem zweiten Druck, wobei die zweite Temperatur niedriger als die erste Temperatur ist;
c) Waschen des zweimalig gequenchten Synthesegases in einem Ölwäscher bei einer Waschtemperatur, die im Bereich der zweiten Temperatur liegt, wobei das aus dem Ölwäscher abgezogene belastete Waschöl thermisch in einer Strippkolonne und/oder mittels Strippgas regeneriert und anschliessend abgekühlt in den Ölwäscher rezykliert wird;
d) Reinigen des gequenchten und gewaschenen Synthesegases in einer mit einem Katalysator dotierten Adsorptionsstufe; und
e) Zuführen des so gereinigten Synthesegases in einen Veredlungsprozess.

Die so beschriebene mehrstufige Vorreinigung mittels mindestens eines Quenchings sowie einer Absorption/Desorption-Stufe und ggf. reaktive Adsorption sowie ggf. HDS-Katalyse (Hydrogendesulfurization-Catalysis) und/oder Chemisorption erfüllt diese Aufgabe exzellent.

## Beschreibung

Die vorliegende Erfindung bezieht sich auf ein System und ein Verfahren zur Aufbereitung von Gas aus einer Biomasse-Vergasung.

Bei der Vergasung von Biomasse, insbesondere von Holz, entsteht ein Synthesegas, welches für die meisten Veredlungsprozesse (z.B. Methanierung, Fischer-Tropsch-Reaktion) in unbehandelter Form ungeeignet ist, da noch zuviel Schadstoffe enthalten sind. Schadstoffe sind insbesondere höhere Kohlenwasserstoffe (Schwerstflüchter, Schwerflüchter, insbesondere Aromaten, Wachse und Teere), sowie Schwefelverbindungen (z.B. H₂S, COS, Thiole, schwefelhaltige Heteroaromaten). Wenn es gelingt, die Schadstoffe aus dem Synthesegas effizient zu entfernen, so kann dieses selbst für katalytische Veredelungsprozesse (z.B. Methanierung, Fischer-Tropsch-Reaktion) verwendet werden.

Der vorliegenden Erfindung liegt daher die Aufgabe zugrunde, ein Verfahren und ein System zur Aufbereitung von Gas aus einer Biomasse-Vergasung anzugeben, welche das Gas mit einer für die erforderlichen Standzeiten im Veredelungsprozess beispielsweise mittels eines Katalysators ausreichenden Reinheit bereitstellt.

Diese Aufgabe wird bezüglich des Verfahrens erfindungsgemäss durch ein Verfahren zur Aufbereitung eines aus einer Biomassevergasung stammenden Synthesegases gelöst, welches die folgenden Schritte umfasst:
a) ein oder mehrstufiges Kühlen und/oder Quenchen des Synthesegases auf eine erste Temperatur und einem ersten Druck, wo zum Herbeiführen einer partiellen Kondensation zur Abtrennung von Schwerstflüchtern;
b) Waschen des gekühlten/gequenchten Synthesegases in einem Ölwäscher bei einer Waschtemperatur, die im Bereich der ersten Temperatur liegt, wobei das aus dem Ölwäscher abgezogene belastete Waschöl thermisch in einer Strippkolonne und/oder mittels Strippgas regeneriert und anschliessend abgekühlt in den Ölwäscher rezykliert wird;
c) ggf. Reinigen des gekühlten/gequenchten und gewaschenen Synthesegases in einer mit einem Katalysator dotierten Adsorberstufe; und
d) Zuführen des so gereinigten Synthesegases in einen Veredlungsprozess.

Bezüglich des Systems wird diese Aufgabe erfindungsgemäss durch ein System zur Aufbereitung eines aus einer Biomassevergasung stammenden Synthesegases gelöst, welches im Wesentlichen die folgenden Komponenten umfasst:
a) eine erste Kühler- oder Quencher-Stufe, die das Synthesegases auf eine erste Temperatur und einen ersten Druck bringt; ggf. eine nachfolgende zweite Kühler- oder Quencher-Stufe, die das zum vorgekühlte Synthesegases auf eine zweite Temperatur und einem zweiten Druck bringt, wobei die zweite Temperatur niedriger als die erste Temperatur ist;
b) einen nachgeschalteten Ölwäscher zum Waschen des zweimalig gequenchten bzw. gekühlten Synthesegases bei einer Waschtemperatur, die im Bereich der zweiten Temperatur liegt, wobei das aus dem Ölwäscher abgezogene belastete Waschöl thermisch in einer Strippkolonne und/oder mittels Strippgas regeneriert und anschliessend abgekühlt in den Ölwäscher rezykliert wird;
c) ggfs. eine dem Ölwäscher nachgeschaltete Adsorberstufe zum Reinigen des gequenschten und gewaschenen Synthesegases unter Verwendung von einem mit einem Katalysator/Aktivator dotierten Adsorbens (z.B. dotierte Aktivkohle), insbesondere zur partiellen Oxidation von H₂S; und
e) einer Zuführung zum Zuführen des so gereinigten Synthesegases in einen Veredlungsprozess.

Die so beschriebene mehrstufige Vorreinigung mittels mindestens eines Kühlens/Quenchings sowie einer Absorption/Desorption-Stufe und ggf. reaktive Adsorption sowie ggfs. HDS-Katalyse (Hydrogendesulfurizations-Catalysis und/oder Chemisorption erfüllt diese Aufgabe exzellent. Es ist dabei nicht zwingend erfindungswesentlich, dass zwei Kühl/Quenching-Stufen vorhanden sind. Eine hinreichende Reinigung des Abgases liesse sich auch schon durch einen Kühl/Quenching-Vorgang und die nachfolgende Absorptions/Desorptionsstufe erzielen. Die Temperatur einer einzigen Kühl-/Quenching-Stufe sollte dann auf dem Niveau der Absorptions-Stufe (Ölwäscher) liegen.

Bei einem mehrstufigen Quenching ist es besonders vorteilhaft, wenn die erste Temperatur im Bereich von 0 bis 70°C und die zweite Temperatur im Bereich von -20 bis +30°C liegen. Vorteilhafte Wäschertemperaturen liegen im Bereich der zweiten Temperatur.

Eine sinnvolle Weiterverwertung von aus dem Veredlungsprozess stammenden Abfallprodukten, wie z.B. CO₂-reiches Gasgemisch, kann erzielt werden, wenn das Strippgas aus dem Veredlungsprozess stammt, vorzugsweise als ein CO₂-reiches Gas aus einer CO₂-Abtrennung.

Eine besonders gute Abscheidung wird ermöglicht, indem aus der Ölwäsche etwas Waschöl abgezogen und frisches Waschöl hinzugefügt wird. Dadurch können Schwerstflücher, die in der Desorption nicht ausgetrieben werden können, aus dem Waschkreis ausgeschleust werden.

Falls extrem tiefe Schadstoffwerte für das behandelte Synthesegas erreicht werden sollen, ist besonders vorteilhaft, das so gereinigte Synthesegas vor der Zuführung zu dem Veredlungsprozess unter Aufheizung noch einer HDS-Stufe und anschliessender Abkühlung einem Chemisorber zugeführt wird. Auf diese Weise können dem Synthesegas die selbst nach der Adsorber-Stufe noch vorhandenen Schwefelverbindungen, die in der Regel eher organischer Natur sind, gespalten und im Chemisorber zusammen mit Resten H₂S gebunden werden.

Typischerweise wird eine derartige Gasreinigungskaskade permanent betrieben und Wartungs-und/oder Regenerierungsaufgaben auf ein Mindestmass beschränkt. Aus diesem Grunde ist es besonders zweckmässig, die Adsorberstufe und/oder der Chemisorber jeweils redundant auszuführen. Auf diese Weise ist immer eine Stufe in aktuellen Prozess eingebunden, während in der jeweils anderen Stufe beispielsweise das Adsorbens oder der Chemisorber gewechselt werden kann.

Von der Effizienz her gesehen ist es weiter besonders günstig, wenn ein Teil des aus dem Ölwäscher abgezogenen mit Schwerstflüchter belasteten Waschöls dem ersten und/oder zweiten Quenching (so vorhanden) zugeführt wird.

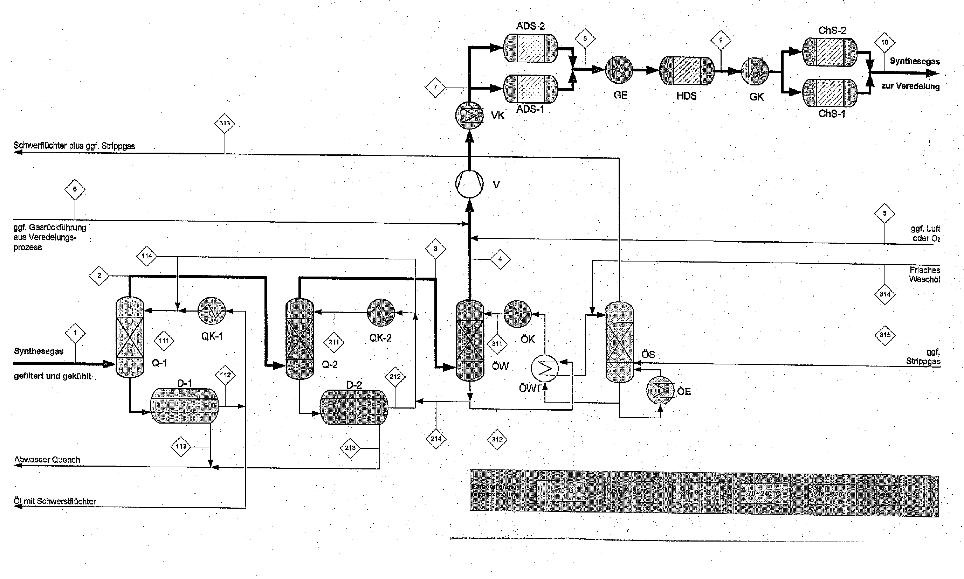

Bevorzugte Ausführungsbeispiele der vorliegenden Erfindung werden anhand einer Figur näher beschrieben. Dabei zeigt die Figur in schematischer Ansicht eine schematische Darstellung der wesentlichen Prozessbaugruppen für die Aufbereitung eines aus der Biomasse-Vergasung stammenden Synthesegases. Das Synthesegas der Biomassevergasung wird üblicher Weise unter Nutzung von Wärmeenergie auf rund 50 bis 150°C gekühlt und gefiltert (1). Dieses Gas wird einem ersten Kühler / Quencher (Q-1) zugeleitet. In dieser Stufe werden vom Gasstrom Schwerstflüchter (Teere, Wachse und teilweise Teeröle) sowie Wasser partiell abgetrennt und gleichzeitig wird auf etwa Kühlwassertemperatur abgekühlt. Die Trennung der organischen Phase (112) und der wässerigen Phase (113) erfolgt in einem Dekanter (D-1), und in einem Quencherkühler (QK-1) wird Wärmeenergie abgeführt. Diese Stufe gehört zum Stand der Technik, wobei im Quencher (Q-1) immer wieder frisches Waschöl zugesetzt wird. Das Ziel ist es, möglichst viel Energie nutzbar oder mit Kühlwasser abführen zu können. Hierbei wird bereits gebrauchtes, vorbeladenes Waschöl aus einer zweiten Quencherstufe in die erste Quencherstufe nachgespiesen (114). Unerheblich ist, ob diese erste Stufe als Quencher mit Kühlkreislauf und Abscheider/Dekanter oder als Kühler mit Abscheider ausgeführt wird.

Der teilweise gereinigte Gasstrom (2) wird einem zweiten Quencher (Q-2) zugeführt. Damit nun das Gas weiter gereinigt werden kann, wird in dieser zweiten Quenchstufe ungefähr auf die Temperatur der Ölwäsche (-20 bis +30°C) gekühlt. Damit kann sicher gestellt werden, dass die Flüssigkeit aus der Ölwäsche maximal beladen werden kann. In dieser zweiten Quencherstufe werden vom Gasstrom weiter Schwerstflüchter sowie teilweise Schwerflüchter (z.B. Aromaten, schwere Thiole, schwefelhaltige Heteroaromaten) und Wasser abgetrennt. Der gereinigte Gasstrom (3) wir einem Ölwäscher (ÖW) zugeführt. Die Trennung der organischen (212) und der wässerigen (213) Phase erfolgt in einem weiteren Dekanter (D-2) und in einem Quencherkühler (QK-2) wird Wärmeenergie abgeführt. Waschöl wird aus der Ölwäsche bezogen (214). Unerheblich ist, ob diese zweite Stufe als Quencher mit Kühlkreislauf und Abscheider/Dekanter oder als Kühler mit Abscheider ausgeführt wird.

Das Erreichen einer für die Absorption der Schadstoffe in der Ölwäsche geeigneten tiefen Temperatur ist erfindungswesentlich. Aus Energie- und Trenntechniküberlegungen heraus kann es vorteilhaft sein, eine erste und zweite Kühl-/Quencherstufe zu unterscheiden.

Die Ölwäsche nach der zweiten Quencherstufe dient dazu, dem Gasstrom (3) alle noch vorhandenen, absorbierbaren Schadstoffe (Schwerflüchter, insbesondere Aromaten, Wachse und Teere sowie Thiole, schwefelhaltige Heteroaromaten) maximal entziehen zu können. Dazu wird mit einer Öl-ähnlichen Flüssigkeit (z.B. eine geeignete Mineralölfraktion, ein Mineralölderivat, ein Biodiesel wie Rapsöl-Methyl-Ester), die einen hohen Siedepunkt hat, im Ölwäscher (ÖW) gewaschen und die Schadstoffe in der Flüssigphase absorbiert.

Das beladene Waschöl wird in einer Stripkolonne (ÖS) thermisch mittels Ölerhitzer/Verdampfer (ÖE) und/oder mit Stripgas regeneriert. Das Stripgas (315) kann insbesondere aus einer der Veredelungsstufe nachgelagerten Prozessstufe stammen (z.B. CO₂-reiches Gas aus der CO₂-Abtrennung). Das regenerierte Waschöl auf den Ölwäscher (311) wird aus dem Ölstripper kommend via Ölwärmeaustauscher (ÖWT), wo Wärme an das beladene Waschöl (312) übertragen wird, und Ölkühler (ÖK) gekühlt. Der Ölwäscher wird vorzugsweise bei einer Temperatur von -20 bis +30 °C betrieben. Etwas frisches Waschöl muss zugegeben werden (314). Hierbei ist nun die Kombination von Absorption (Ölwäscher) und Desorption (Ölstripper) für diese Anwendung einer der zentralen Punkte, insbesondere auch in Kombination mit der reaktiven Adsorption.

Oft wird ein Rezirkulationsstrom (z.B. nicht reagierte Gase wie H₂) aus dem dem Aufbereitungsprozess folgenden Veredelungsprozess zugegeben (6), wobei die Zugabe an mehreren Stellen sinnvoll möglich ist.

Die für verfahrenstechnische Prozesse übliche Druckerhöhung kann an mehreren Orten im Prozess erfolgen, insbesondere nach der Ölwäsche bzw. vor der reaktiven Adsorption. Üblicherweise ist ein derartiges System für einen Druck um Atmosphäre bis über 70 bar geeignet.

Das von absorbierbaren Schadstoffen weitgehend befreite Gas (7) wird über eine mit Katalysator/Aktivator dotiertes Adsorbens geleitet (ADS-1 oder ADS-2; ein Festbett im Betrieb, das andere wird ersetzt bzw. ist bereit für den Betrieb bzw. in Serie nachgeschaltet). Auf diesem speziell dotierten Adsorbens wird H₂S aufoxidiert (und teilweise auch COS), wobei elementarer Schwefel entsteht, der am Adsorbens gebunden wird. Der dazu benötigte Sauerstoff wird, so nicht durch Leckagen im Gasstrom sowieso vorhanden, aktiv zu gegeben (5). Reste von Schwerstflüchter und Schwerflüchter, die sich noch im Gasstrom 7 befinden, werden ebenfalls am Adsorbens zurückgehalten. Diese Art der Umsetzung von H₂S zu elementarem Schwefel und dessen Bindung an einem Adsorbens (insbesondere mittels dotierter Aktivkohle) basiert auf bekannter Technologie. Falls extrem tiefe Schadstoffwerte im Gas erreicht werden sollen, kann das Gas (8) nach einer Erwärmung (Gaserhitzer, GE) einer HDS-Stufe (Hydrogendesulfurization-Catalysis) zugeführt werden, so dass organische Schwefelverbindungen gespalten werden und nach Abkühlung (Gaskühler, GK) im darauf folgenden Chemisorber (ChS-1 oder ChS-2; ein Festbett im Betrieb, das andere wird ersetzt bzw. ist bereit für den Betrieb bzw. in Serie nachgeschaltet; Festbett bestehend z.B. aus Metalloxid) gebunden werden. Diese Stufen sind einzeln gesehen für sich Stand der Technik, aber die Verbindung mit den vorgehenden Stufen ist im Stand der Technik nicht bekannt.

Das gereinigte Gas (10) wird dann einem katalytischen Veredelungsprozess zugeführt.

## Patentansprüche

1. Verfahren zur Aufbereitung eines aus einer Biomassevergasung stammenden Synthesegases, umfassend die folgenden Schritte:
a) ein oder mehrstufiges Kühlen oder Quenchen des Synthesegases bei einer ersten Temperatur und einem ersten Druck;
b) optional nachfolgendes zweites Quenchen des gequenchten Synthesegases bei einer zweiten Temperatur und einem zweiten Druck, wobei die zweite Temperatur niedriger als die erste Temperatur ist, insbesondere auf eine Temperatur, die für eine folgende Waschstufe geeignet ist unter gleichzeitigem Abtrennen von Schwerstflüchtern;
b) Waschen des gekühlten/gequenchten Synthesegases in einem Ölwäscher bei einer Waschtemperatur, die im Bereich der Austrittstemperatur der vorangehenden Quencher- bzw. Kühlstufe liegt, wobei das aus dem Ölwäscher abgezogene belastete Waschöl thermisch in einer Strippkolonne und/oder mittels Strippgas regeneriert und anschliessend abgekühlt in den Ölwäscher rezykliert wird;
c) Reinigen des gequenschten und gewaschenen Synthesegases in einem mit einem Katalysator dotierten Adsorbens; und
d) Zuführen des so gereinigten Synthesegases in einen Veredlungsprozess.

2. Verfahren nach Anspruch 1, beim dem die geeignete Wäscher-Temperatur im Bereich von -20 bis +30°C liegen.

3. Verfahren nach einem der vorhergehenden Ansprüche, bei dem das Strippgas aus dem Veredlungsprozess stammt, vorzugsweise als ein CO₂-reiches Gas aus einer CO₂-Abtrennung.

4. Verfahren nach einem der vorhergehenden Ansprüche, bei dem dem aus der Ölwäsche abgezogene Waschöl vor dem Eintritt in einen Ölstripper frisches Waschöl hinzugefügt wird.

5. Verfahren nach einem der vorhergehenden Ansprüche, bei dem das so gereinigte Synthesegas vor der Zuführung zu dem Veredlungsprozess unter Aufheizung noch einer HDS-Stufe und anschliessender Abkühlung einem Chemisorber zugeführt wird.

6. Verfahren nach einem der vorhergehenden Ansprüche, bei dem die Adsorptionsstufe und/oder der Chemisorber redundant ausgeführt sind.

7. Verfahren nach einem der vorangehenden Ansprüche, bei dem ein Teil des aus dem Ölwäscher abgezogenen Waschöls dem ersten und/oder zweiten Quenching zugeführt wird.

8. System zur Aufbereitung eines aus einer Biomassevergasung stammenden Synthesegases, umfassend:
a) eine erste Quencher-Stufe zum Quenchen des Synthesegases bei einer ersten Temperatur und einem ersten Druck;
b) optional eine nachfolgende zweite Quencher-Stufe zum Quenchen des gequenchten Synthesegases bei einer zweiten Temperatur und einem zweiten Druck, wobei die zweite Temperatur niedriger als die erste Temperatur ist;
c) einen nachgeschalteten Ölwäscher zum Waschen des zweimalig gequenchten Synthesegases, wobei das aus dem Ölwäscher abgezogene belastete Waschöl thermisch in einer Strippkolonne und/oder mittels Strippgas regeneriert und anschliessend abgekühlt in den Ölwäscher rezykliert wird;
d) eine dem Ölwäscher nachgeschaltete Adsorbtionsstufe zum Reinigen des gequenschten und gewaschenen Synthesegases unter Verwendung eines mit einem Katalysator dotierten Adsorbens; und
e) einer Zuführung zum Zuführen des so gereinigten Synthesegases in einen Veredlungsprozess.

9. System nach Anspruch 8, beim dem die geeignete Temperatur im Ölwäscher im Bereich von -20 bis 30°C liegt.

10. System nach Anspruch 8 oder 9, bei dem das Strippgas aus dem Veredlungsprozess stammt, vorzugsweise als ein CO₂-reiches Gas aus einer CO₂-Abtrennung.

11. System nach einem der vorhergehenden Ansprüche 8 bis 10, bei dem dem aus der Ölwäsche abgezogenen Waschöl vor dem Eintritt in einen Ölstripper frisches Waschöl hinzugefügt wird.

12. System nach einem der vorhergehenden Ansprüche 8 bis 11, bei dem das so gereinigte Synthesegas nach der Adsorptionsstufe und vor der Zuführung zu dem Veredlungsprozess unter Aufheizung noch einer HDS-Stufe und anschliessender Abkühlung einem Chemisorber zuführbar ist.

13. System nach einem der vorhergehenden Ansprüche 8 bis 12, bei dem die Adsorptionsstufe und/oder der Chemisorber ggf. aauch redundant ausgeführt sind.

14. System nach einem der vorangehenden Ansprüche 8 bis 13, bei dem ein Teil des aus dem Ölwäscher abgezogenen Waschöls dem ersten und/oder zweiten Quenching zuführbar ist.
